# EUROPÄISCHE PATENTSCHRIFT

(11) **EP 3 824 225 B1**
(45) Veröffentlichungstag und Bekanntmachung des Hinweises auf die Patenterteilung: **07.06.2023**
(21) Anmeldenummer: 19749231.7
(22) Anmeldetag: 18.07.2019
(51) Int. Cl.: F24F 11/00, F24F 11/63, F24F 11/88, H02P 23/00

(54) **ZUSATZSTEUERGERÄT, LÜFTUNGSANORDNUNG, LÜFTUNGSSYSTEM, BETRIEBSVERFAHREN FÜR EIN ZUSATZSTEUERGERÄT, COMPUTERPROGRAMM-PRODUKT**
AUXILIARY CONTROL DEVICE, VENTILATION ARRANGEMENT, VENTILATION SYSTEM, METHOD OF OPERATION FOR AUXILIARY CONTROL DEVICE, COMPUTER PROGRAM PRODUCT
DISPOSITIF DE COMMANDE AUXILIAIRE, DISPOSITIF DE VENTILATION, SYSTÈME DE VENTILATION, MÉTHODE DE FONCTIONNEMENT DU DISPOSITIF DE COMMANDE AUXILIAIRE, PRODUIT DE PROGRAMME INFORMATIQUE

(30) Priorität: 19.07.2018 DE 102018117514
(43) Veröffentlichungstag der Anmeldung: 26.05.2021
(73) Patentinhaber: LUNOS Lüftungstechnik GmbH & Co. KG für Raumluftsysteme, 13593 Berlin (DE)
(72) Erfinder: STECKENBORN, Michael, 12529 Schönefeld (DE); MERSCHER, Michael, 14612 Falkensee (DE)
(74) Vertreter: Eisenführ Speiser
(86) Internationale Anmeldenummer: PCT/EP2019/069348
(87) Internationale Veröffentlichungsnummer: WO 2020/016349

(56) Entgegenhaltungen:
- EP-A1- 3 182 607
- US-A- 5 559 407
- US-A1- 2003 011 984

## Beschreibung

Die Erfindung betrifft ein Zusatzsteuergerät zur lokalen Anpassung eines einem externen Lüfter zuzuführenden Steuersignals. Die Erfindung betrifft weiter einen Lüfter, ein Lüftungssystem, ein Verfahren zum Betreiben eines Zusatzsteuergerätes und ein Computerprogramm-Produkt.

Zur Belüftung und Entlüftung von Räumen, insbesondere in Wohnungen oder Häusern, werden dezentrale Lüftungssysteme eingesetzt, die jeweils einen oder mehrere Lüfter in den zu belüftenden Räumen aufweisen. Die Lüfter befördern mit Hilfe ihres Ventilators je nach Typ die Zuluft und/oder die Abluft zur Belüftung des betreffenden Raumes. Als Ventilator werden Radialventilatoren oder Axialventilatoren eingesetzt.

Aus Nutzersicht ist es wünschenswert, auch in solchen dezentralen Lüftungssystemen mit individuell betriebenen Lüftern ein zentrales Steuergerät vorzusehen, welches beispielsweise das gewünschte oder vorgeschriebene Fördervolumen im Luftaustausch vorgibt. Durch eine derartige Steuerung können die Lüfter also dem Bedarf entsprechend ein- oder ausgeschaltet werden, oder es kann ihre Förderleistung oder Förderrichtung gesteuert werden. Mit einem solchen zentralen Steuergerät und einer Vielzahl von ihm gesteuerter dezentraler Lüfter entsteht eine sternförmige Topologie.

Bei der Beförderung von Zu- oder Abluft ist es erstrebenswert, einen möglichst konstanten Fördervolumenstrom zu erzielen, der einem vorgegebenen Soll-Fördervolumenstrom entspricht. Dies ist unter Referenzbedingungen relativ einfach möglich, beispielsweise indem der Ventilator des Lüfters mit einem Steuersignal wie etwa einer Steuerspannung oder einem pulsweitenmodulierten Steuersignal, zum Erzielen einer bestimmten Drehzahl angesteuert wird. Über einen experimentell oder rechnerisch bestimmten Zusammenhang zwischen einer bestimmten Ventilatordrehzahl und einem bei dieser Ventilatordrehzahl bewirktem Fördervolumenstrom kann der Lüfter somit zum Erreichen eines gewünschten Fördervolumenstroms angesteuert werden.

Hierfür kann in einer ersten Alternative das Steuergerät jedem Lüfter des Lüftungssystems dasselbe Steuersignal zuführen. Eine derartige, relativ einfach gehaltene und daher technisch besonders aufwandsarme Steuerlösung hat sich in vielen Anwendungsfällen als ausreichend erwiesen. In der Praxis ist bei diesem Vorgehen jedoch problematisch, dass auf einen jeweiligen Lüfter individuelle Störeinflüsse wirken können, wodurch eine Abweichung von den Referenzbedingungen entsteht. Beispielsweise kann Wind, der auf die Außenwand eines Hauses einwirkt, bei einem durch diese Außenwand hindurch arbeitenden Lüfter zu einem erhöhten Gegendruck führen, der dem von diesem Lüfter zu befördernden Fördervolumenstrom entgegenwirkt. Bei steigendem Gegendruck ist der den Ventilator antreibende Motor ab einem bestimmten Arbeitspunkt nicht mehr in der Lage, den vorgegebenen Fördervolumenstrom aufrechtzuerhalten, wodurch sich der Fördervolumenstrom somit verringert. An anderen Außenwänden des Hauses können zur selben Zeit aufgrund der gegebenen Windrichtung ganz andere Druckverhältnisse herrschen, die den Fördervolumenstrom von dort angeordneten Lüftern nicht beeinträchtigen.

In einer zweiten bekannten Alternative der Steuerung ist vorgesehen, dass das Steuergerät nur einer ersten Teilmenge der Lüfter des Lüftungssystems ein erstes Steuersignal zuführt, und einer zweiten Teilmenge von Lüftern des Lüftungssystems ein eigens für sie erzeugtes zweites Steuersignal, wobei das erste und das zweite Steuersignal den jeweiligen Teilmengen von Lüftern zeitgleich zugeführt werden und derart aufeinander abgestimmt sind, dass durch das Zusammenwirken eines Lüfters der ersten Teilmenge mit einem Lüfter der zweiten Teilmenge in einem jeweiligen Raum ein gewünschter Luftstrom entsteht. Hierbei sind also das erste und zweite Steuersignal in der Regel synchronisiert.

Es wäre also wünschenswert, einen vorbestimmten Fördervolumenstrom trotz Änderungen des Gegendrucks im Betrieb des Lüfters möglichst konstant halten zu können.

In EP 3 182 607 A1 ist ein Steuergerät beschrieben, das ein Statussignal eines Lüfters auswerten kann. In US 5,599,407 A und US 2003/0011984 A1 werden Steuerungen für Lüfter beschrieben.

Es wurden auch Lüfter mit zusätzlicher Drucksensorik, mittels derer ein auf den Lüfter wirkender Gegendruck erfasst wird, und damit verbundener Regelungsvorrichtung entwickelt, so dass der Lüfter dem gemessenen Gegendruck entsprechend nachgeregelt werden kann. Derartige Lüfter sind jedoch mit einem erhöhten apparativen Aufwand verbunden, was sie unter Kostengesichtspunkten unattraktiv macht und darüber hinaus zu einem erhöhten Wartungs- und Reparaturaufwand führt. Derartige Systeme stoßen auf dem Markt auf wenig Interesse.

Aus diesen Gründen ist es wünschenswert, eine verbesserte Möglichkeit anzugeben, mit der in einem Lüftungssystem eine Volumenstromkonstanz für einen einzelnen Lüfter geregelt werden kann.

Gemäß einem ersten Aspekt betrifft die vorliegende Erfindung ein Zusatzsteuergerät zur lokalen Anpassung eines einem geräteexternen Lüfter zuzuführenden Steuersignals, aufweisend:
- einen Versorgungs-Eingang, dem eine Lüfter-Versorgungsspannung zuführbar ist;
- einen Versorgungs-Ausgang, der ausgebildet ist, die zugeführte Lüfter-Versorgungsspannung dem geräteexternen Lüfter bereitzustellen;
- einen Steuer-Eingang, der ausgebildet ist, von einem geräteexternen Steuergerät ein dem externen Lüfter zuzuführendes Ist-Steuersignal zu empfangen, welches dem Lüfter eine Soll-Förderleistung vorgibt;
- eine Steuereinheit, die mit dem Steuer-Eingang und mit dem Versorgungs-Eingang verbunden ist und die die Lüfter-Versorgungsspannung zu ihrer eigenen Leistungsversorgung nutzt, und die aufweist:
- eine Förderleistungs-Bestimmungseinheit, die ausgebildet ist, eine mit einer Ist-Förderleistung des Lüfters korrelierende Leistungs-Messgröße zu erfassen;
- eine Steuersignal-Anpassungseinheit, die ausgebildet ist, in Abhängigkeit von dem empfangenen Ist-Steuersignal und der erfassten Leistungs-Messgröße ein Soll-Steuersignal zu bestimmen und mit dem empfangenen Ist-Steuersignal zu vergleichen;
- eine Leistungssteuereinheit, die ausgebildet ist, in Abhängigkeit vom Vergleichsergebnis entweder das empfangene Ist-Steuersignal oder das Soll-Steuersignal an einem Steuer-Ausgang an den externen Lüfter auszugeben.

Die vorliegende Erfindung beruht auf der Erkenntnis der Notwendigkeit, bei einem Lüftungssystem mit einer Vielzahl von Lüftern unter relativ geringem apparativen Aufwand jeden Lüfter derart zu regeln, dass der Lüfter einen konstanten Fördervolumenstrom fördert, das heißt eine konstante Ist-Förderleistung aufweist. Die Erfindung stützt sich auf den Lösungsgedanken, einen herkömmlichen Lüfter nach individuellem Bedarf mit einem Zusatzsteuergerät ausstatten zu können, mit dem unter geringem Aufwand, und insbesondere ohne dass weitere Sensoren benötigt werden, eine Fördervolumenstrom-Konstanz-Regelung für den betreffenden Lüfter erzielt wird. Eine derartige Regelung kann auch nachgerüstet werden, nachdem der Lüfter bereits installiert und in Betrieb genommen ist.

Dazu sieht das erfindungsgemäße Zusatzsteuergerät einen Steuer-Eingang vor, der ausgebildet ist, von einem geräteexternen Steuergerät ein dem externen Lüfter zuzuführendes Ist-Steuersignal zu empfangen, welches dem Lüfter eine Soll-Förderleistung vorgibt. Ein solches geräte-externes Steuergerät ist typischerweise ein zentrales Steuergerät, welches den Betrieb einer Vielzahl von Lüftungsgeräten steuert.

Weiterhin hat das erfindungsgemäße Zusatzsteuergerät eine Förderleistungs-Bestimmungseinheit, die ausgebildet ist, eine mit einer Ist-Förderleistung des geräteexternen Lüfters korrelierende Leistungs-Messgröße zu erfassen.

Mit diesen Eingangsgrößen fungiert das externe Steuergerät also als zentraler Sollwertgeber für ein Steuersignal. Das externe Steuergerät kann besonders einfach und ohne komplizierte Verdrahtungsanforderungen, insbesondere ohne Anschlüsse für einen Rückkanal vom Lüfter an das Steuergerät ausgebildet werden.

Durch nachträgliche Installation oder bereits herstellerseitige Ausstattung des Lüfters mit dem Zusatzsteuergerät eine Lüfter-individuelle Regelung erfolgen, indem nämlich eine Leistungs-Messgröße des individuellen Lüfters vom Zusatzsteuergerät erfasst und in Abhängigkeit dieser Leistungs-Messgröße und dem Ist-Steuersignal ein Soll-Steuersignal für den betreffenden Lüfter bestimmt und dem Lüfter zugeführt wird.

Auf diese Weise ist es möglich, bei Erfassung einer abfallenden Leistungs-Messgröße das Steuersignal für den betreffenden Lüfter unabhängig von der Steuerung anderer Lüfter im System derart anzupassen, dass die Leistungs-Messgröße - und somit der tatsächliche Fördervolumenstrom des Lüfters - wieder zurück in den Sollbereich geführt wird.

Durch eine derartige optionale, individuelle dezentrale Regelung kann jeder Lüfter, trotz unterschiedlicher, Lüfter-individueller Gegendrücke, auf einen konstanten Fördervolumenstrom, das heißt eine konstante Ist-Förderleistung des Lüfters, geregelt werden, ohne dass das externe zentrale Steuergerät des Lüftungssystems für diese Vielzahl individueller Regelvorgänge in Anspruch genommen wird.

Nachfolgend werden Ausführungsbeispiele des erfindungsgemäßen Zusatzsteuergeräts beschrieben.

In bevorzugten Ausführungsformen weist die Förderleistungs-Bestimmungseinheit einen zwischen dem Versorgungs-Eingang und dem Versorgungs-Ausgang in Reihe geschalteten Strommesser auf, der ausgebildet ist, im Betrieb des Lüfters einen zwischen dem Versorgungs-Eingang und dem Versorgungs-Ausgang fließenden elektrischen Strom als die Leistungs-Messgröße zu erfassen. Dies kann konkret beinhalten, dass das Zusatzsteuergerät - neben der Verbindung zur Steuerleitung - zusätzlich zwischen eine Versorgungsleitung und einen Versorgungsanschluss des Lüfters geschaltet ist, und somit eine vom Lüfter aufgenommene elektrische Leistung messen kann. Eine Leistungsmessung kann nämlich bei annähernd konstanter Versorgungsspannung durch die Messung des durch die Versorgungsleitung fließenden elektrischen Stroms erfolgen. Der Strommesser kann beispielsweise als Stromflusssensor ausgebildet sein. Auf diese Weise kann, ohne auf einen zusätzlichen Sensor angewiesen zu sein, eine mit einer Ist-Förderleistung des Lüfters korrelierende Leistungs-Messgröße erfasst werden. Die Ist-Förderleistung des Lüfters entspricht dabei einem tatsächlichen - auch den Gegendruck berücksichtigenden - Förder-volumenstrom, der durch den Lüfter bewegt wird. Somit wird insbesondere ermöglicht, unter relativ geringem Installationsaufwand ein Zusatzsteuergerät nachzurüsten, da Versorgungsleitung und Steuerleitung an einer Stelle unterbrochen werden können und das Zusatzsteuergerät an dieser Stelle zwischengeschaltet werden kann. An dieser Schnittstelle kann sowohl die Leistungs-Messgröße gemessen werden - nämlich an der Versorgungsleitung - als auch zwecks Regelung dem Lüfter das Soll-Steuersignal zugeführt werden - nämlich über die Steuerleitung. In bevorzugten Ausführungsformen wird das Zusatzsteuergerät zum Nachrüsten in eine bestehende Steckverbindung zwischengeschaltet, wobei die Steckverbindung vorher, das heißt vor dem Nachrüsten, den Lüfter mit der Versorgungsleitung und/oder der Steuerleitung verbunden hat.

Das Zusatzsteuergerät wird ebenfalls über die Versorgungsleitung des Lüfters mit Energie versorgt. Dies hat den Vorteil, dass eine zusätzliche Anschlussleitung eingespart, und der mit der Installation Aufwand reduziert werden kann. Das Zusatzsteuergerät hat aufgrund seiner Funktionen eine geringe Leistungsaufnahme. Obwohl diese Leistungsaufnahme des Zusatzsteuergeräts in die Strommessung und somit in die Bestimmung der Leistungs-Messgröße einfließt, kann es daher als Störgröße vernachlässigt werden. Die Leistungsaufnahme des Zusatzsteuergeräts ist dabei in etwa um den Faktor 10 geringer als die Leistungsaufnahme des Lüfters. Weiterhin kann, aufgrund der kontinuierlich durchgeführten Rechenoperationen des Zusatzsteuergeräts, von einer konstanten Leistungsaufnahme des Zusatzsteuergeräts ausgegangen werden. Somit kann die Leistungsaufnahme des Zusatzsteuergeräts unter relativ geringem Aufwand, beispielsweise durch Subtrahieren eines konstanten Werts vom Messergebnis, aus dem Ergebnis der Messung entfernt werden.

In einer Ausführungsform weist die Förderleistungs-Bestimmungseinheit zusätzlich einen Drucksensor auf, der ausgebildet ist, als Leistungs-Messgröße ein Drucksignal zu messen, welches mit einem einem Förder-Volumenstrom des Lüfters entgegenwirkenden Gegendruck korreliert, und die Steuersignal-Anpassungseinheit ist ausgebildet, das Soll-Steuersignal allein oder, falls die Förderleistungs-Bestimmungseinheit wie oben erläutert einen zwischen dem Versorgungs-Eingang und dem Versorgungs-Ausgang in Reihe geschalteten Strommesser aufweist, zusätzlich in Abhängigkeit vom Drucksignal als der erfassten Leistungs-Messgröße zu bestimmen. Eine derartige Ausführungsform basiert auf der Erkenntnis, dass der Gegendruck die wesentliche Störgröße bei der Regelung des Lüfters auf einen Soll-Fördervolumenstrom darstellt. Durch die messtechnische Erfassung des Gegendrucks durch einen oder mehrere Drucksensoren am Lüfter kann diese Störgröße erfasst werden und zur Bestimmung des Fördervolumenstroms herangezogen werden. Der Gegendruck ist die statische Druckdifferenz zwischen der Seite vor dem Lüfter und der Seite hinter dem Lüfter und kann beispielsweise durch von außen auf ein Gebäude wirkenden Wind, oder durch innerhalb eines Gebäudes wirkenden Unterdruck, hervorgerufen werden.

In einer Ausführungsform ist der Förderleistungs-Bestimmungseinheit zusätzlich ein Drehzahlsignal eines Ventilators des externen Lüfters zugeführt und die Förderleistungs-Bestimmungseinheit ist ausgebildet, unter Verwendung des Drehzahlsignals die Leistungs-Messgröße eindeutig einem Förder-Volumenstrom zuzuordnen, und bei dem die Steuersignal-Anpassungseinheit ausgebildet ist, das Soll-Steuersignal zusätzlich in Abhängigkeit von dem Drehzahlsignal und dem gemessenen Strom als der erfassten Leistungs-Messgröße zu bestimmen. In einer derartigen Ausführungsform wird die Lüfterdrehzahl, das heißt die Drehzahl des Ventilators des Lüfters, zur verbesserten näherungsweisen Bestimmung des vom Lüfter geförderten Fördervolumenstroms herangezogen. Liegt nämlich sowohl die Kenntnis über die vom Lüfter aktuell aufgenommene Leistung, als auch über die aktuelle Drehzahl vor, kann ein aktueller Arbeitspunkt des Lüfters - insbesondere eindeutig - bestimmt werden. Bei einer Bestimmung des Fördervolumenstroms lediglich basierend auf der vom Lüfter aufgenommenen elektrischen Leistung kann nämlich der Fall auftreten, dass für einen Messwert mehrere Arbeitspunkte des Lüfters infrage kommen. So kann ein Lüfter in einem Arbeitspunkt mit niedriger Drehzahl und hohem Gegendruck dieselbe elektrische Leistung aufnehmen wie in einem Arbeitspunkt mit höherer Drehzahl und niedrigerem Gegendruck. Durch die messtechnische Bestimmung der Lüfterdrehzahl kann eine solche Zweideutigkeit reduziert, insbesondere ausgeschlossen, werden.

In einer Ausführungsform ist ein Zusatzsteuergerät vorgesehen mit einem Kennlinienspeicher, der eine Vielzahl von Kennlinienfeldern des externen Lüfters enthält, die jeweils eine Abhängigkeit zwischen der Leistungs-Messgröße und dem Förder-Volumenstrom anzeigen, und bei dem die Steuersignal-Anpassungseinheit ausgebildet ist, das Soll-Steuersignal auf Basis von mindestens einem Kennlinienfeld zu bestimmen. Mittels derartiger Kennlinienfelder kann für einen aktuellen Arbeitspunkt des Lüfters, welcher durch die Leistung-Messgröße beschrieben wird, ein zugehöriger aktueller Fördervolumenstrom näherungsweise bestimmt werden. Im Kennlinienspeicher können eine Vielzahl von Kennlinienfeldern, beispielsweise für verschiedene Lüftertypen, vorgehalten und ausgewählt werden.

In einer Ausführungsform ist ein Zusatzsteuergerät vorgesehen mit einem Funktionsmodul, das mindestens eine mathematische Funktion aufweist, wobei die mindestens eine mathematische Funktion eine Abhängigkeit zwischen einem dem Förder-Volumenstrom des Lüfters entgegenwirkenden Gegendruck und dem Förder-Volumenstrom beschreibt.

In einer Ausführungsform ist vorgesehen, dass die Steuersignal-Anpassungseinheit weiter einen Parametrierungsschalter aufweist, der ausgebildet ist, mindestens ein Kennlinienfeld aus einer Gesamtheit aus Kennlinienfeldern einzustellen. Mittels eines derartigen Parametrierungsschalters ist es vorteilhaft möglich, bei der Installation des Zusatzsteuergeräts einen Gerätetypen auszuwählen, der dem Lüfter entspricht, an dem das Zusatzsteuergerät installiert wird. Somit kann ein Installateur bei der Montage die Auswahl des Gerätetyps vornehmen. Der Parametrierungsschalter kann als Drehschalter ausgebildet sein, der insbesondere über einen Schraubenzieher oder per Hand betätigbar ist. Eine Auswahl kann hierbei erfolgen, indem der Drehschalter in eine dem gewünschten Gerätetypen entsprechenden Drehposition bewegt wird. Der Parametrierungsschalter kann auch als eine Anordnung einer Stiftleiste und einer oder mehrerer Steckbrücken, sogenannter Jumper, ausgebildet sein. In diesem Fall kann eine Auswahl des Gerätetyps durch eine bestimmte Anordnung der Steckbrücken auf der Stiftleiste erfolgen. In einer anderen Variante wird ein sog. DIP-Schalter (engl., dual in-line package) verwendet. Mit Hilfe einer Kombination mehrerer dieser Schalter oder unterschiedlicher Schaltstellungen kann auf kleinem Raum eine große Menge Information kodiert werden. Damit können vorteilhafterweise mehr Einstellungen vorgenommen werden als beispielsweise mit einem Drehschalter oder Jumper.

In einer alternativen Ausführungsform weist die Steuersignal-Anpassungseinheit eine Nutzerschnittstelle auf, über die Informationen zu einem Gerätetyp eingegeben werden können und ist ausgebildet, mindestens ein Kennlinienfeld aus einer Gesamtheit aus Kennlinienfeldern entsprechend den Informationen zum Gerätetyp auszuwählen. Bei dieser Ausführungsform kann eine Parametrierung entsprechend dem Gerätetyp somit auch ohne einen Schalter vorgenommen und beispielsweise vom Installateur über ein mobiles Gerät eingestellt werden. Des Weiteren kann die Steuersignal-Anpassungseinheit eine Nutzerschnittstelle aufweisen, über die mindestens ein Kennlinienfeld aus einer Gesamtheit aus Kennlinienfeldern entsprechend einem Gerätetyp vorgegeben werden, beispielsweise über eine externen Computer.

In einer Ausführungsform ist vorgesehen, dass das Steuersignal als Spannungssignal oder als pulsweitenmoduliertes Signal ausgebildet ist. In beiden Fällen wird durch das Steuersignal ein Sollwert, insbesondere eine Drehzahl, für eine interne Lüftersteuerung und/oder für den Motor eines Lüfters angegeben. In Weiterbildungen, in denen das Steuersignal als Spannungssignal ausgebildet ist, beschreibt ein zum Sollwert proportionales Spannungssignal diesen Zusammenhang. In Weiterbildungen, in denen das Steuersignal als pulsweitenmoduliertes Signal ausgebildet ist, wird der Sollwert in Form einer Pulsweite kodiert.

Ein zweiter Aspekt der Erfindung betrifft eine Lüftungsanordnung mit einem Lüfter, der einen Steuersignal-Eingang zum Empfang eines Steuersignals und einen mit Hilfe des Steuersignals steuerbaren Ventilator aufweist, wobei die Lüftungsanordnung zusätzlich ein Zusatzsteuergerät gemäß dem ersten Aspekt der Erfindung oder einer seiner Ausführungsformen aufweist, das lüfter-intern oder lüfter-extern dem steuerbaren Ventilator oder dem Steuersignal-Eingang vorgeschaltet ist.

Die Lüftungsanordnung teilt die Vorteile, die oben im Zusammenhang mit dem Zusatzsteuergerät erläutert wurden.

Durch die Tatsache, dass zur Regelung des Lüfters in Abhängigkeit der erfassten Leistungs-Messgröße lediglich das Ist-Steuersignal in das Soll-Steuersignal gewandelt wird, kann das Zusatzsteuergerät in einer solchen Lüftungsanordnung vorteilhaft als nachrüstbares Modul ausgebildet werden, das geeignete Anschlüsse aufweist, beispielsweise für eine Steckverbindung, zur einfachen nachträglichen Installation im Steuerpfad zwischen dem externen Steuergerät und einem Steuereingang des jeweiligen Lüfters. Damit ist das Zusatzsteuergerät unter relativ geringem Aufwand nachrüstbar.

In anderen Ausführungsformen der Lüftungsanordnung ist das Zusatzsteuergerät bereits herstellerseitig in einen Lüfter integriert. Hierbei kann ggf. ein Gehäuse sogar fortgelassen werden und die Anschlüsse entsprechend einfach ausgebildet werden, zumal die Verbindung zum Steuereingang des Lüfters beispielsweise durch Verlöten hergestellt werden kann und das Zusatzsteuergerät durch ein Lüftergehäuse bereits ausreichend geschützt ist.

Ein dritter Aspekt der Erfindung betrifft ein Lüftungssystem, aufweisend: mindestens eine Lüftungsanordnung nach dem zweiten Aspekt der Erfindung oder einer ihrer Ausführungsformen, und ein Steuergerät, das der mindestens einen Lüftungsanordnung das Ist-Steuersignal bereitstellt.

Ein vierter Aspekt der Erfindung betrifft ein Betriebsverfahren eines Zusatzsteuergerätes gemäß dem ersten Aspekt der Erfindung oder einer seiner Ausführungsformen zur lokalen Anpassung eines einem geräteexternen Lüfter zuzuführenden Steuersignals, aufweisend:
- Empfangen einer Lüfter-Versorgungsspannung;
- Bereitstellen der Lüfter-Versorgungsspannung an den geräteexternen Lüfter;
- Empfangen eines dem Lüfter zuzuführenden Ist-Steuersignals, welches dem geräteexternen Lüfter eine Soll-Förderleistung vorgibt, von einem geräteexternen Steuergerät;
- Erfassen einer mit einer Ist-Förderleistung des Lüfters korrelierenden Leistungs-Messgröße;
- Bestimmen eines Soll-Steuersignals in Abhängigkeit von dem empfangenen Ist-Steuersignal und der erfassten Leistungs-Messgröße;
- Vergleichen des Soll-Steuersignals mit dem Ist-Steuersignal;
- Ausgeben des empfangenen Ist-Steuersignals oder des Soll-Steuersignals an den geräteexternen Lüfter in Abhängigkeit vom Vergleichsergebnis.

Ein fünfter Aspekt der Erfindung betrifft ein Computerprogramm-Produkt, enthaltend ausführbaren Programmcode zur Steuerung der Durchführung eines Betriebsverfahrens durch eine programmierbare Prozessorvorrichtung des Zusatzsteuergerätes gemäß dem ersten Aspekt der Erfindung oder einer seiner Ausführungsformen.

Nachfolgend werden anhand der beiliegenden Zeichnungen weitere Ausführungsbeispiele der Erfindung beschrieben. Es zeigen:
- Fig. 1: ein Zusatzsteuergerät in einem schematischen Schaltbild,
- Fig. 2: einen möglichen Aufbau einer Lüftungsanordnung,
- Fig. 3: eine schematische Kennlinie eines Kennlinienfeldes,
- Fig. 4: einen Aufbau eines Lüftungssystems in einem Gebäude,
- Fig. 5: eine weitere Ausführungsform einer Lüftungsanordnung,
- Fig. 6A, 6B: jeweils eine Ausführungsform eines Parametrierungsschalters.

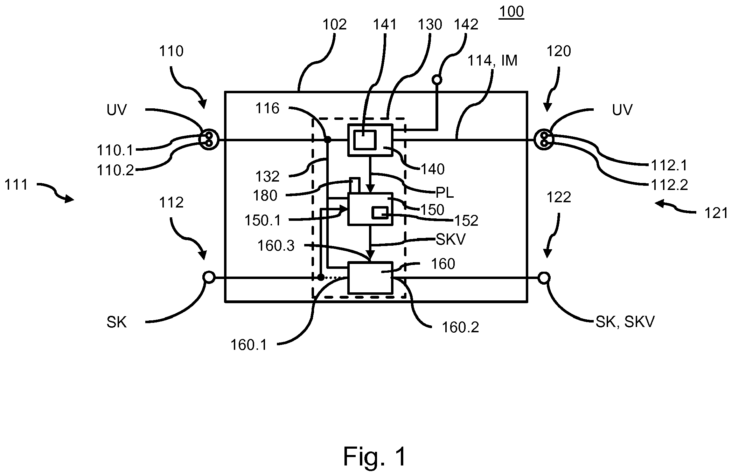

Fig. 1 zeigt ein Zusatzsteuergerät 100 gemäß dem Konzept der Erfindung. Das Zusatzsteuergerät 100 weist auf einer Eingangsseite 111 einen Versorgungs-Eingang 110 mit einem positiven Eingangsanschluss 110.1 und einem negativen Eingangsanschluss 110.2 auf. Das Zusatzsteuergerät 100 weist auf seiner Eingangsseite 111 weiter einen Steuer-Eingang 112 auf. An einer Ausgangseite 121 weist das Zusatzsteuergerät 100 an einem Versorgungs-Ausgang 120 einen positiven Ausgangsanschluss 120.1 und einen negativen Ausgangsanschluss 120.2 auf. Das Zusatzsteuergerät 100 weist auf seiner Ausgangseite 121 weiter einen Steuer-Ausgang 122 auf.

Das Zusatzsteuergerät 100 weist einen auf der Eingangsseite 111 angeordneten Anschluss 110.1, 110.2, 112 auf, der jeweils einem auf der Ausgangsseite 121 angeordneten Anschluss 120.1, 120.2, 122 zugeordnet ist und kann an einen - insbesondere eine eigene, interne Lüftersteuerung 810 aufweisenden - Lüfter 800 angeschlossen werden. Das Zusatzsteuergerät 100 kann dabei zwischen eine Versorgungsleitung 802 und die interne Lüftersteuerung 810 angeschlossen und somit vorteilhaft unter relativ geringem Aufwand bei einem Lüfter 800 nachgerüstet werden.

Das Zusatzsteuergerät 100 weist ein Gehäuse 102 auf, welches die Komponenten des Zusatzsteuergeräts 100 in geeigneter Weise schützt und von Umgebungseinflüssen wie Feuchtigkeit und Staub abgeschirmt. Das Gehäuse 102 kann beispielsweise aus Kunststoff oder - insbesondere nicht rostendem - Metall gebildet sein. Die Anschlüsse 110, 112, 120, 122 können dabei als Stecker, Polklemmen, oder dergleichen elektrischer Kontakt ausgebildet sein um eine zuverlässige und relativ einfache Montage zu ermöglichen. Die Anschlüsse 110, 112 können zu einem dreipoligen Eingangssteckmodul zusammengefasst sein. Analog können die Anschlüsse 120, 122 zu einem Ausgangssteckmodul zusammengefasst sein.

In Ausführungsformen können die Anschlüsse 110, 112, 120, 122 vom Gehäuse 102 umhaust sein, wobei in diesem Fall das Gehäuse zwecks Montage zumindest teilweise im Bereich der Anschlüsse 110, 112, 120, 122 geöffnet werden kann. In derartigen Weiterbildungen ist der Bereich der Anschlüsse 110, 112, 120, 122 ebenfalls vorteilhaft vor Umgebungseinflüssen geschützt.

Vorliegend wird dem Zusatzsteuergerät 100 über die Versorgungsleitung 802 an dem positiven Eingangsanschluss 110.1 und dem negativen Eingangsanschluss 110.2 eine Versorgungsspannung UV bereitgestellt und an dem Steuer-Eingang 112 ein Steuersignal SK bereitgestellt. Hierbei ist der positive Eingangsanschluss 110.1 mit dem positiven Ausgangsanschluss 120.1, sowie der negative Eingangsanschluss 110.2 mit dem negativen Ausgangsanschluss 120.2 verbunden derart, dass die Versorgungsspannung UV am Ausgang 120 des Zusatzsteuergeräts 100 bereitgestellt wird.

Das Zusatzsteuergerät 100 weist eine Steuereinheit 130 auf, die mit dem Versorgungs-Eingang 110 und dem Steuer-Eingang 112 verbunden ist. Die Steuereinheit 130 weist eine Förderleistungs-Bestimmungseinheit 140, eine Steuersignal-Anpassungseinheit 150 und eine Leistungssteuereinheit 160 auf.

Die Förderleistungs-Bestimmungseinheit 140 weist vorliegend einen Strommesser 141 auf, der ausgebildet ist, einen zwischen Versorgungs-Eingang 110 und Versorgungs-Ausgang 120 in einer Hauptleitung 114 fließenden Strom IM zu messen. Vorliegend wird der gemessene Strom IM als Leistungs-Messgröße PL verwendet, die näherungsweise mit einem Fördervolumenstrom VF des Lüfters 800 korreliert.

Die Förderleistung-Bestimmungseinheit 140 ist mit der Steuersignal-Anpassungseinheit 150 verbunden, sodass die Leistungs-Messgröße PL an die Steuersignal-Anpassungseinheit 150 übergeben wird. Der Zweck der Steuersignal-Anpassungseinheit 150 ist, ein Soll-Steuersignal SKV zu generieren. Das Generieren erfolgt in Abhängigkeit der Leistungs-Messgröße PL, beispielsweise indem eine Steuerspannung US oder ein pulsweitenmoduliertes Signal PWM in Abhängigkeit der Leistungs-Messgröße PL erzeugt wird. Auch kann zum Generieren des Soll-Steuersignals SKV das Ist-Steuersignal SK mit einem veränderlichen Faktor, der von der Leistungs-Messgröße PL abhängig ist, multipliziert werden. In diesem Falle erfolgt - anstelle eines Neu-Generierens des Soll-Steuersignals SKV - ein Anpassen des Ist-Steuersignals SK zum Bestimmen des Soll-Steuersignals SKV.

Das Generieren des Soll-Steuersignals SKV erfolgt auf Basis der Erkenntnis, dass bei konstanter Versorgungsspannung UV der gemessene Strom IM proportional zur am Ausgang 120 vom Lüfter 800 aufgenommenen elektrischen Leistung PO ist. Mit der Information über die aufgenommene elektrische Leistung PO kann eine näherungsweise Zuordnung zu einem vom Lüfter 800 geförderten Fördervolumenstrom VF erfolgen. Bei einem relativ hohen gemessenen Strom IM wird auf einen relativ hohen geförderten Fördervolumenstrom VF geschlossen; umgekehrt wird bei einem relativ niedrigen gemessenen Strom IM auf einen relativ niedrigen gemessenen Strom IM geschlossen.

Der Zusammenhang zwischen der Leistungs-Messgröße PL und dem Fördervolumenstrom VF kann über ein Kennlinienfeld KP beschrieben werden. Die Steuersignal-Anpassungseinheit 150 weist einen Kennlinienspeicher 152 auf, in dem ein oder mehrere Kennlinienfelder KP gespeichert und bei Bedarf bereitgestellt werden können.

Die Steuersignal-Anpassungseinheit 150 weist weiter einen Parametrierungsschalter 180 auf, über den ein Kennlinienfeld KP aus einer Gesamtheit KPG von Kennlinienfeldern KP ausgewählt werden kann. Durch eine Auswahl eines Kennlinienfeldes KP kann das Zusatzsteuergerät 100 insbesondere bei seiner Installation auf einen bestimmten Gerätetypen eines Lüfters 800 eingestellt werden.

Das Soll-Steuersignal SKV wird über einen Leistungssteuer-Stelleingang 160.3 der Leistungssteuereinheit 160 bereitgestellt. Die Leistungssteuereinheit 160 überträgt das Soll-Steuersignal SKV über einen Leistungssteuer-Ausgang 160.2 auf den Steuer-Ausgang 122. In bevorzugten Ausführungsformen ist die Leistungssteuereinheit 160 dazu ausgebildet, das Soll-Steuersignal SKV nur dann an den Steuer-Ausgang 142 zu übertragen, wenn es mehr als einen bestimmten Betrag von dem Ist-Steuersignal SK abweicht. Ist die Abweichung unterhalb dieses Betrages, wird lediglich das Ist-Steuersignal SK, welches der Leistungssteuereinheit 160 über einen Leistungssteuer-Eingang 160.1 bereitgestellt werden kann, zum Leistungssteuer-Ausgang 160.2 somit zum Steuer-Ausgang 122 übertragen.

Die Komponenten der Steuereinheit 130 werden über die Hauptleitung 114 mit elektrischer Energie versorgt. Hierzu ist ein Versorgungszweig 132 über einen Abzweigknoten 116 an die Hauptleitung 114 angeschlossen. Der Versorgungzweige 132 ist sowohl an die Steuersignal-Anpassungseinheit 150 als auch an die Leistungssteuereinheit 160 zwecks elektrischer Versorgung angeschlossen. Der Energieverbrauch des Zusatzsteuergeräts 100 beeinflusst daher die Bestimmung der Leistungs-Messgröße PL auf Basis des gemessenen Stroms IM. Allerdings ist die Leistungsaufnahme des Zusatzsteuergeräts 100 gering im Vergleich zu der Leistungsaufnahme des Lüfters 800. Außerdem ist die Leistungsaufnahme des Zusatzsteuergeräts 100 relativ konstant, wodurch diese aus dem Ergebnis der Strommessung mit relativ geringem Aufwand rechnerisch entfernt werden kann.

Über das Zusatzsteuergerät 100 erfolgt ein Regeln des Lüfters 800 über das Einstellen des Soll-Steuersignals SKV, und zwar in Abhängigkeit der Leistungsaufnahme des Lüfters 800, das heißt der elektrischen Leistung PO, die über den Ausgang 120 des Zusatzsteuergeräts 100 vom Lüfter 800 abgefordert wird.

In bevorzugten Ausführungsformen kann die Förderleistung-Bestimmungseinheit 140 einen Sensoreingang 142 aufweisen. Über diesen Sensoreingang 142 können, alternativ oder zusätzlich zum Strommesser 141 der Förderleistung-Bestimmungseinheit 140, Messwerte zur Bestimmung der Leistungs-Messgröße PL aufgenommen werden. Insbesondere kann eine Drehzahl N eines Lüfters 800 über den Sensoreingang 142 bereitgestellt werden. Hierzu kann der Sensoreingang 142 mit einem hier nicht dargestellten Positionssensor oder Drehgeber verbunden werden. In Ausführungsformen ist es möglich, die Drehzahl N direkt aus einem Motor des Ventilators auszulesen.

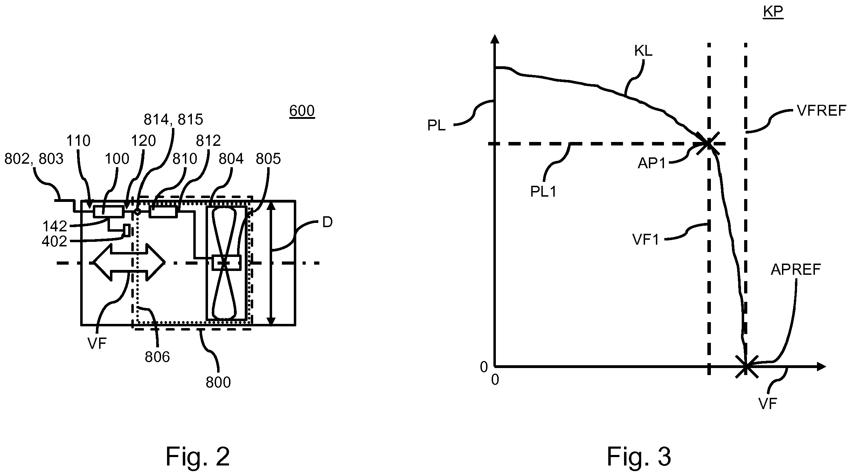

Auch kann an den Sensoreingang 142 ein - ein in Fig. 2 dargestellter - Drucksensor 402 angeschlossen werden. Über den Drucksensor 402 kann der am Lüfter 800 wirkende Gegendruck PG messtechnisch bestimmt werden. Mittels des Gegendrucks PG kann der Fördervolumenstrom VF besser angenähert werden, insbesondere da die Schätzung des Fördervolumenstroms nicht allein auf der elektrischen Ausgangsleistung PO beruht.

Ein möglicher Aufbau einer Lüftungsanordnung 600 mit einem Lüfter 800 und einem Zusatzsteuergerät 100 ist in Fig. 2 schematisch dargestellt. Der Lüfter 800 weist ein Lüftergehäuse 806 auf, dieses ist vorliegend als Rohrabschnitt gebildet, dessen Durchmesser D in etwa dem Durchmesser des Lüftungsrohres entspricht, an das der Lüfter 800 angeschlossen ist.

Innerhalb des Lüftergehäuses 806 ist ein Ventilator 804 angeordnet, der koaxial zu dem rohrförmigen Lüftungsgehäuse 806 angeordnet ist. Der Lüfter verfügt weiterhin über eine interne Steuerung 810, die einen Motor 805 des Ventilators 804 über eine elektrische Ventilatorleitung 812 versorgt und steuert. Der Motor 805 ist dabei bevorzugt als EC-Motor ausgebildet. Die interne Lüftersteuerung 810 ist nicht direkt mit einer Versorgungsleitung 802 verbunden; stattdessen ist zwischen die Versorgungsleitung 802 und die interne Lüftersteuerung 810 das Zusatzsteuergerät 100 zwischengeschaltet. In vorteilhaften Weiterbildungen ist das Zusatzsteuergerät 100 derart ausgeführt, dass es ein einfaches Nachrüsten, das heißt eine nachträgliche Installation in den Lüfter 800 unter relativ geringem Aufwand, erlaubt. Eine derartige Nachrüstbarkeit wird insbesondere erreicht durch standardisierte Steckverbindungen an den Eingängen 110, 112 und an den Ausgängen 120, 122, die insbesondere mit einer bereits bestehenden Steckverbindung zwischen der Versorgungsleitung 802 und der internen Steuerung 810 kompatibel sind.

In bevorzugten Weiterbildungen der Erfindung ist es ebenfalls möglich, dass der Lüfter 800 keine interne Steuerung 810 aufweist, und das Zusatzsteuergerät 100 somit den Ventilator 804 direkt ansteuert, indem der Ausgang 120 direkt an die Ventilatorleitung 812 angeschlossen ist.

Fig. 3 zeigt schematisch eine Kennlinie KL eines Kennlinienfeldes KP. Die Kennlinie KL beschreibt den Zusammenhang zwischen einem Fördervolumenstrom VF und einer Leistungsmessgröße PL bei konstanter Lüfterdrehzahl N. Unter Referenzbedingungen, das heißt insbesondere, wenn ein gegen den Fördervolumenstrom VF wirkender Gegendruck PG gleich Null ist, beträgt die Leistungs-Messgröße PL ebenfalls gleich null. In diesem Fall nimmt der Fördervolumenstrom VF an einem Referenz-Arbeitspunkt APREF einen maximalen Referenzwert VFREF an. Wenn nun der Gegendruck PG ansteigt, steigt gleichzeitig die Leistungsaufnahme des Lüfters 800. Das heißt, die elektrische Leistung PO, die benötigt wird, um den Lüfter 800 bei steigendem Gegendruck PG auf der konstanten Lüfterdrehzahl N zu halten werden größer. Folglich steigt damit ebenfalls der gemessene Strom IM und somit die Leistungs-Messgröße PL. An einem hier dargestellten ersten Arbeitspunkt AP1 wird eine erste Leistungs-Messgröße PL1 gemessen. Gemäß der Kennlinie KL beträgt der Fördervolumenstrom den Wert VF1, der folglich kleiner ist als der Wert VFREF. Somit kann mittels der Leistungs-Messgröße PL der Fördervolumenstrom VF näherungsweise bestimmt werden.

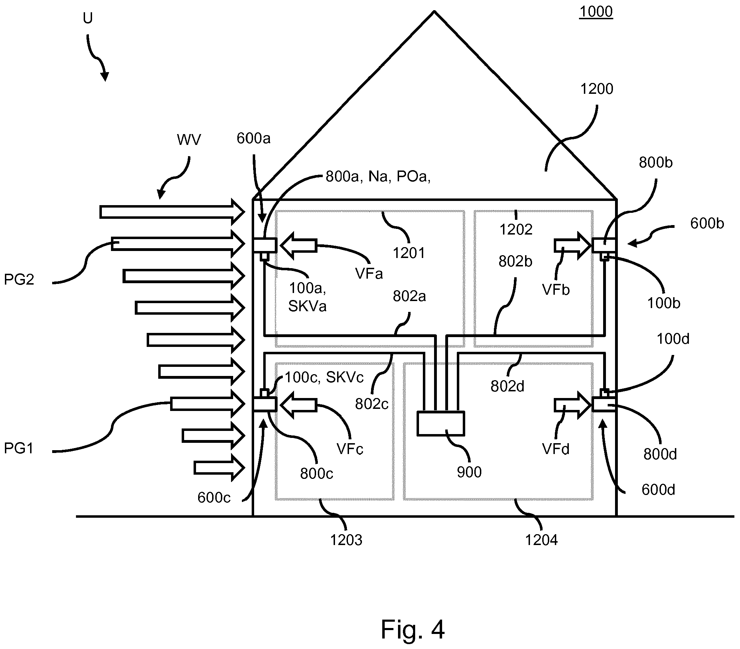

Fig. 4 zeigt schematisch den Aufbau eines Lüftungssystems 1000 in einem Gebäude 1200. Das Gebäude 1200 weist dabei vier Räume 1201, 1202, 1203, 1204 auf. Beispielhaft ist vorliegend jedem Raum 1201-1204 eine Lüftungsanordnung 600a-d mit jeweils einem Lüfter 800a-d zugeordnet; diese Zuordnung ist lediglich beispielhaft - genauso ist es zum Beispiel möglich, dass einem Raum mehrere Lüfter zugeordnet sind.

Die vier Lüftungsanordnungen 600a-d weisen jeweils ein Zusatzsteuergerät 100a-d gemäß dem Konzept der Erfindung auf. Die vier Zusatzsteuergeräte 100a-d sind mit einem externen Steuergerät 900 verbunden. Die Regelung der Lüfter 800a-d durch das jeweils zugeordnete Zusatzsteuergerät 100a-d sorgt dafür, dass stets ein vordefinierter Volumenstrom VFa-d gefördert wird - insbesondere unabhängig von einem auf den jeweiligen Lüfter 800a-d wirkenden Gegendruck PG. Somit ist diese Regelung vorteilhaft dezentral ausgebildet, da das externe Steuergerät 900 lediglich einen Sollzustand für jeden einzelnen Lüfter 800a-d vorgibt - dies kann im einfachsten Falle der Zustand "ein" oder "aus" sein, oder ein für einen bestimmten Soll-Fördervolumen VFSOLL bestimmtes Steuersignal SK. Die Regelung eines jeweils einzelnen Lüfters wird von dem diesem Lüfter 800a-d zugeordneten Zusatzsteuergerät 100a-d übernommen. Somit wird jeder Lüfter 800a-d gemäß den an diesem Lüfter herrschenden Umgebungsbedingungen, insbesondere gemäß dem an dem jeweiligen Lüfter 800a-d herrschenden Gegendruck PG, geregelt.

Vorliegend ist ein erster Lüfter 800a in der Außenwand des Gebäudes 1200 zwischen der Umgebung U und dem ersten Raum 1201 angeordnet. Der erste Lüfter 800a weist ein Zusatzsteuergerät 100a auf, welches über eine erste Versorgungsleitung 802a mit der Zentralsteuerung 900 verbunden ist.

Aufgrund der Witterungsverhältnisse liegt eine Windverteilung WV vor, welche auf das Gebäude 1200 wirkt und im oberen Bereich stärker ausgeprägt ist als im unteren, bodennahen Bereich. Hieraus resultiert ein höherer zweiter Gegendruck PG2, der auf den weiter oben angeordneten ersten Lüfter 800a wirkt, als ein erster Gegendruck PG1, der auf einen weiter unten angeordneten dritten Lüfter 800c wirkt.

Die Regelung erfolgt gemäß dem Konzept der Erfindung dezentral durch das jeweilige Zusatzsteuergerät 100a, 100c. Damit nämlich eine konstante erste Lüfterdrehzahl Na des ersten Lüfter 800a gehalten werden kann, ist aufgrund des Gegendruck PG2 eine höhere elektrische Ausgangsleistung POa des ersten Lüfter 800a notwendig. Dieser erhöhte Leistungsbedarf wird über die - hier nicht näher dargestellte - Förderleistung-Bestimmungseinheit 140 gemessen. Auf Basis der Messung wird von der Förderleistung-Bestimmungseinheit ein erstes Soll-Steuersignal SKVa generiert, welches wiederum an eine erste Leistungssteuereinheit 150a geleitet wird. Die erste Leistungssteuereinheit 150a leitet das erste Soll-Steuersignal SKVa an den ersten Lüfter 800a, um die Förderleistung des Lüfters 800a zu erhöhen. Dieser Anpassungsvorgang wird im Sinne eines Regelkreises wiederholt, bis eine erste elektrische Ausgangsleistung POa des ersten Lüfters 800a gemessen wird, die dem ersten Soll-Fördervolumenstrom VFa entspricht.

Wird nun angenommen, dass der erste Fördervolumenstrom VFa und der dritte Fördervolumenstrom VFc einen betragsmäßig gleich hohen Sollwert VFSOLL haben und beide Luftvolumenströme VFa, VFc - beispielsweise im Rahmen eines Pendellüftungsverfahrens - aus dem Gebäude 1200 hinaus geführt werden, muss ein erstes Soll-Steuersignal SKVa des ersten Lüfter 800a aufgrund des höheren Gegendruck PG2 höher eingestellt werden als ein drittes Soll-Steuersignal SKVc des dritten Lüfters 800c.

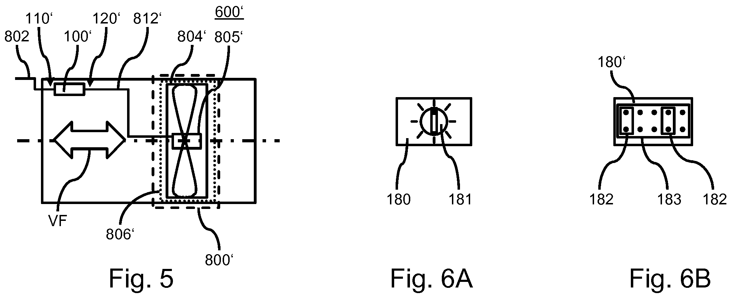

Fig. 5 zeigt eine Weiterbildung eines Lüfters 800' mit einem Lüftergehäuse 806', der keine interne Lüftersteuerung 810 aufweist. Stattdessen ist ein Zusatzsteuergerät 100' über eine Ventilatorleitung 812' direkt mit einem Motor 805' eines Ventilators 804' verbunden. Das Zusatzsteuergerät 100' steuert in dieser Weiterbildung also direkt den Ventilator 804' an und übernimmt somit die Funktion der internen Lüftersteuerung 810.

Fig. 6A und 6B zeigen jeweils vorteilhafte Weiterbildungen eines Parametrierungsschalters 180, 180'. Fig. 6A zeigt einen Parametrierungsschalter 180 mit einem Wahlschalter 181. Mittels des Parametrierungsschalters 180 kann eine geräte- oder typenspezifische Einstellung eines oder mehrerer passenden Kennlinienfelder KP, zum Beispiel mittels eines Schraubenziehers über einen Wahlschalter 181 am Parametrierungsschalter 180 erfolgen. Je nach Drehstellung des Wahlschalters 181 kann somit ein spezifisches Modell des Lüfters 800 ausgewählt werden. Der Parametrierungsschalter 180 kann derart angeordnet sein, dass er von der Außenseite eines hier nicht dargestellten Gehäuses 102 zugänglich ist. Alternativ kann er in das Gehäuse 102 integriert sein, sodass das Gehäuse 102, insbesondere bei der Installation des Zusatzsteuergeräts 100, zum Parametrieren geöffnet werden muss. Durch den Parametrierungsschalter 180 kann das Zusatzsteuergerät 100, insbesondere bei einem Nachrüsten, mit relativ geringem Aufwand an ein spezifisches Modell des Lüfters 800 angepasst werden.

Alternativ zu einem Drehschalter kann ein Parametrierungsschalter 180' - dies ist in Fig. 6B gezeigt - ebenfalls eine Anordnung aus einer oder mehreren Steckbrücken 182, sogenannten Jumper, aufweisen, die auf eine elektronische Stiftleiste 183 gesteckt werden. Auf diese Weise können, je nach Anordnung der Steckbrücken 182, ein oder mehrere Kennlinienfelder KP für ein spezifisches Modell des Lüfters 800 ausgewählt werden. Mittels einer oder mehrerer Steckbrücken 182 kann ein Zusatzsteuergerät 100 vorteilhaft auf eine relativ große Anzahl von Varianten eingestellt werden.

### Bezugszeichenliste

- 100, 100a-d, 100': Zusatzsteuergerät
- 102: Gehäuse
- 110: Versorgungs-Eingang
- 110.1: Positiver Eingangsanschluss
- 110.2: Negativer Eingangsanschluss
- 111: Eingangsseite
- 112: Steuer-Eingang
- 114: Hauptleitung
- 116: Abzweigknoten
- 120: Versorgungs-Ausgang
- 120.1: Positiver Ausgangsanschluss
- 120.2: Negativer Ausgangsanschluss
- 121: Ausgangseite
- 122: Steuer-Ausgang
- 130: Steuereinheit
- 132: Versorgungszweig
- 140: Förderleistungs-Bestimmungseinheit
- 141: Strommesser
- 142: Sensor-Eingang
- 150: Steuersignal-Anpassungseinheit
- 152: Kennlinienspeicher
- 160: Leistungssteuereinheit
- 160.1: Leistungssteuer-Eingang
- 160.2: Leistungssteuer-Ausgang
- 160.3: Leistungssteuer-Stelleingang
- 180, 180': Parametrierungsschalter
- 181: Wahlschalter
- 182: Steckbrücke
- 183: Stiftleiste
- 400: Sensor
- 402: Drucksensor
- 600, 600a-d, 600': Lüftungsanordnung
- 700: Stromversorgung
- 710: Übergeordnete Steuerung
- 800, 800a-d, 800': Lüfter
- 802: Versorgungsleitung
- 803: Steuerleitung
- 804, 804': Ventilator
- 805, 805': Motor
- 806, 806': Lüftergehäuse
- 810: Interne Lüftersteuerung
- 812, 812': Ventilatorleitung
- 814: Versorgungseingang
- 815: Steuereingang
- 900: Zentralsteuerung
- 1000: Lüftungssystem
- D: Durchmesser des Lüftungsgehäuses
- IM: Gemessener Strom
- KP: Kennlinienfeld
- KPG: Gesamtheit aus Kennlinienfeldern
- N, Na, Nc: Lüfterdrehzahl
- PF: Förderleistung des Lüfters
- PL: Leistungsparameter, mit Förderleistung des Lüfters korrelierender Leistungsparameter
- PO, POa, POc: Elektrische Ausgangsleistung, vom Lüfter aufgenommene Leistung
- PG1, PG2: Erster, zweiter Gegendruck
- PP: Drucksignal
- SK: Ist-Steuersignal
- SKV, SKVa-d: Soll-Steuersignal
- U: Umgebung
- US: Steuerspannung
- UV: Versorgungsspannung
- VF,: Fördervolumenstrom
- VFa-d VFSOLL: Fördervolumenstrom-Sollwert
- WV: Windverteilung

## Patentansprüche

1. Zusatzsteuergerät (100) zur lokalen Anpassung eines einem geräteexternen Lüfter (800) zuzuführenden Steuersignals (SK, SKV), aufweisend:
- einen Versorgungs-Eingang (110), dem eine Lüfter-Versorgungsspannung (UV) zuführbar ist;
- einen Versorgungs-Ausgang (120), der ausgebildet ist, die zugeführte Lüfter-Versorgungsspannung (UV) dem geräteexternen Lüfter (800) bereitzustellen;
- einen Steuer-Eingang (112), der ausgebildet ist, von einem geräteexternen Steuergerät (900) ein dem externen Lüfter (800) zuzuführendes Ist-Steuersignal (SK) zu empfangen, welches dem Lüfter (800) eine Soll-Förderleistung (SFL) vorgibt;
- eine Steuereinheit (130), die mit dem Steuer-Eingang (112) und mit dem Versorgungs-Eingang (110) verbunden ist und die die Lüfter-Versorgungsspannung (UV) zu ihrer eigenen Leistungsversorgung nutzt, und die aufweist:
- eine Förderleistungs-Bestimmungseinheit (140), die ausgebildet ist, eine mit einer Ist-Förderleistung (IFL) des Lüfters (800) korrelierende Leistungs-Messgröße (PL) zu erfassen;
- eine Steuersignal-Anpassungseinheit (150), die ausgebildet ist, in Abhängigkeit von dem empfangenen Ist-Steuersignal (SK) und der erfassten Leistungs-Messgröße (PL) ein Soll-Steuersignal (SKV) zu bestimmen und mit dem empfangenen Ist-Steuersignal (SK) zu vergleichen;
- eine Leistungssteuereinheit (160), die ausgebildet ist, in Abhängigkeit vom Vergleichsergebnis entweder das empfangene Ist-Steuersignal (SK) oder das Soll-Steuersignal (SKV) an einem Steuer-Ausgang (122) an den externen Lüfter (800) auszugeben.

2. Zusatzsteuergerät (100) nach Anspruch 1, **dadurch gekennzeichnet, dass** die Förderleistungs-Bestimmungseinheit (140) einen zwischen dem Versorgungs-Eingang (110) und dem Versorgungs-Ausgang (120) in Reihe geschalteten Strommesser (141) aufweist, der ausgebildet ist, im Betrieb des Lüfters (800) einen zwischen dem Versorgungs-Eingang (110) und dem Versorgungs-Ausgang (120) fließenden elektrischen Strom (IM) als die Leistungs-Messgröße (PL) zu erfassen.

3. Zusatzsteuergerät (100) nach Anspruch 1 oder 2, bei dem
- die Förderleistungs-Bestimmungseinheit (140) zusätzlich einen Drucksensor (402) aufweist, der ausgebildet ist, als Leistungs-Messgröße (PL) ein Drucksignal (PP) zu messen, welches mit einem einem Förder-Volumenstrom (VF) des Lüfters (800) entgegenwirkenden Gegendruck (PG) korreliert, und bei dem
- die Steuersignal-Anpassungseinheit (150) ausgebildet ist, das Soll-Steuersignal (SKV) allein oder, im Falle der Abhängigkeit von Anspruch 2, zusätzlich in Abhängigkeit vom Drucksignal (PP) als der erfassten Leistungs-Messgröße (PL) zu bestimmen.

4. Zusatzsteuergerät (100) nach mindestens einem der Ansprüche 1 bis 3, bei dem
- der Förderleistungs-Bestimmungseinheit (140) zusätzlich ein Drehzahlsignal (PN) eines Ventilators (804) des externen Lüfters (800) zugeführt ist und die Förderleistungs-Bestimmungseinheit (140) ausgebildet ist, unter Verwendung des Drehzahlsignals (PN) die Leistungs-Messgröße (PL) eindeutig einem Förder-Volumenstrom (VF) zuzuordnen, und bei dem
- die Steuersignal-Anpassungseinheit (150) ausgebildet ist, das Soll-Steuersignal (SKV) zusätzlich in Abhängigkeit von dem Drehzahlsignal (PN) und dem gemessenen Strom (IM) als der erfassten Leistungs-Messgröße (PL) zu bestimmen.

5. Zusatzsteuergerät (100) nach mindestens einem der vorherigen Ansprüche,
- mit einem Kennlinienspeicher (152), der eine Vielzahl von Kennlinienfeldern (KP) des externen Lüfters (800) enthält, die jeweils eine Abhängigkeit zwischen der Leistungs-Messgröße (PL) und dem Förder-Volumenstrom (VF) anzeigen, und bei dem
- die Steuersignal-Anpassungseinheit (150) ausgebildet ist, das Soll-Steuersignal (SKV) auf Basis von mindestens einem Kennlinienfeld (KP) zu bestimmen.

6. Zusatzsteuergerät (100) nach mindestens einem der vorherigen Ansprüche,
- mit einem Funktionsmodul, das mindestens eine mathematische Funktion aufweist, wobei die mindestens eine mathematische Funktion eine Abhängigkeit zwischen einem dem Förder-Volumenstrom des Lüfters entgegenwirkenden Gegendruck und dem Förder-Volumenstrom beschreibt.

7. Zusatzsteuergerät (100) nach Anspruch 5, **dadurch gekennzeichnet, dass** die Steuersignal-Anpassungseinheit (150) weiter einen Parametrierungsschalter (180) aufweist, der ausgebildet ist, mindestens ein Kennlinienfeld (KP) aus einer Gesamtheit aus Kennlinienfeldern (KPG) einzustellen.

8. Zusatzsteuergerät (100) nach einem der vorherigen Ansprüche, **dadurch gekennzeichnet, dass** das Steuersignal (SK, SKV) als Spannungssignal (US) oder als pulsweitenmoduliertes Signal (PWM) ausgebildet ist.

9. Lüftungsanordnung (600) mit
- einem Lüfter (800), der einen Steuersignal-Eingang (815) zum Empfang eines Steuersignals (SK, SKV) und einen mit Hilfe des Steuersignals steuerbaren Ventilator (804) aufweist, wobei
- die Lüftungsanordnung (600) zusätzlich ein Zusatzsteuergerät (100) nach einem der Ansprüche 1 bis 8 aufweist, das lüfter-intern oder lüfter-extern dem steuerbaren Ventilator (800) oder dem Steuersignal-Eingang (815) vorgeschaltet ist.

10. Lüftungssystem (1000), aufweisend:
- mindestens eine Lüftungsanordnung nach Anspruch 9, und
- ein Steuergerät (900), das der mindestens einen Lüftungsanordnung das Ist-Steuersignal (SK) bereitstellt.

11. Betriebsverfahren eines Zusatzsteuergerätes (100) gemäß einem der Ansprüche 1 bis 8 zur lokalen Anpassung eines einem geräteexternen Lüfter (800) zuzuführenden Steuersignals (SK, SKV), aufweisend:
- Empfangen einer Lüfter-Versorgungsspannung (UV);
- Bereitstellen der Lüfter-Versorgungsspannung (UV) an den geräteexternen Lüfter (800);
- Empfangen eines dem Lüfter (800) zuzuführenden Ist-Steuersignals (SK), welches dem geräteexternen Lüfter (800) eine Soll-Förderleistung (SFL) vorgibt, von einem geräteexternen Steuergerät (900);
- Erfassen einer mit einer Ist-Förderleistung (IFL) des Lüfters (800) korrelierenden Leistungs-Messgröße (PL);
- Bestimmen eines Soll-Steuersignals (SKV) in Abhängigkeit von dem empfangenen Ist-Steuersignal (SK) und der erfassten Leistungs-Messgröße (PL);
- Vergleichen des Soll-Steuersignals (SKV) mit dem Ist-Steuersignal (SK);
- Ausgeben des empfangenen Ist-Steuersignals (SK) oder des Soll-Steuersignals (SKV) an den geräteexternen Lüfter (800) in Abhängigkeit vom Vergleichsergebnis.

12. Computerprogramm-Produkt, enthaltend ausführbaren Programmcode zur Steuerung der Durchführung eines Verfahrens nach Anspruch 11 durch eine programmierbare Prozessorvorrichtung des Zusatzsteuergerätes gemäß einem der Ansprüche 1 bis 8.

## Claims

1. Auxiliary control device (100) for the local adaptation of a control signal (SK, SKV) to be supplied to a device-external ventilator (800), having:
- a supply input (110) to which a ventilator supply voltage (UV) can be supplied;
- a supply output (120), which is configured to provide the supplied ventilator supply voltage (UV) to the device-external ventilator (800);
- a control input (112) which is configured to receive from a device-external control device (900) an actual control signal (SK) to be supplied to the external ventilator (800), which specifies a target flow rate (SFL) to the ventilator (800);
- a control unit (130) which is connected to the control input (112) and the supply input (110) and which uses the ventilator supply voltage (UV) as its own power supply, and which has:
- a flow rate determining unit (140) which is configured to detect a performance parameter (PL) correlating to an actual flow rate (IFL) of the ventilator (800);
- a control signal adapting unit (150), which is configured to determine a target control signal (SKV) depending on the received actual control signal (SK) and the detected performance parameter (PL) and to compare it with the received actual control signal (SK);
- a performance control unit (160), which is configured, depending on the comparison result, to output either the received actual control signal (SK) or the target control signal (SKV) at a control output (122) to the external ventilator (800).

2. Auxiliary control device (100) according to claim 1, **characterised in that** the flow rate determining unit (140) has a current measuring device (141) connected in series between the supply input (110) and the supply output (120), which is configured during operation of the ventilator (800) to detect an electrical current (IM) flowing between the supply input (110) and the supply output (120) as the performance parameter (PL).

3. Auxiliary control device (100) according to claim 1 or 2, in which
- the flow rate determining unit (140) has in addition a pressure sensor (402), which is configured to measure, as a performance parameter (PL), a pressure signal (PP), which correlates with a counter pressure (PG) acting against a conveying volume flow (VF) of the ventilator (800), and in which
- the control signal adapting unit (150) is configured to determine the target control signal (SKV) alone or, in the case of the dependency from claim 2, in addition depending on the pressure signal (PP) as the detected performance parameter (PL).

4. Auxiliary control device (100) according to at least one of claims 1 to 3, in which
- the flow rate determining unit (140) has in addition a rotational speed signal (PN) of a fan (804) of the external ventilator (800) and the flow rate determining unit (140) is configured to use the rotational speed signal (PN) to assign the performance parameter (PL) unequivocally to a conveying volume flow (VF), and in which
- the control signal adapting unit (150) is configured to determine the target control signal (SKV) additionally depending on the rotational speed signal (PN) and the measured current (IM) as the detected performance parameter (PL).

5. Auxiliary control device (100) according to at least one of the preceding claims,
- having a characteristic curve store (152) which contains a multiplicity of characteristic curves (KP) of the external ventilator (800) which display in each case a dependency between the performance parameter (PL) and the conveying volume flow (VF), and in which
- the control signal adapting unit (150) is configured to determine the target control signal (SKV) on the basis of at least one characteristic curve (KP).

6. Auxiliary control device (100) according to at least one of the preceding claims,
- having a function module which has at least one mathematical function, wherein the at least one mathematical function describes a dependency between a counter pressure, acting against the conveying volume flow of the ventilator, and the conveying volume flow.

7. Auxiliary control device (100) according to claim 5, **characterised in that** the control signal adapting unit (150) furthermore has a parametrisation switch (180) which is configured to set at least one characteristic curve (KP) from a totality of characteristic curves (KPG).

8. Auxiliary control device (100) according to any of the preceding claims, **characterised in that** the control signal (SK, SKV) is configured as a voltage signal (US) or as a pulse-width modulated signal (PWM).

9. Ventilation arrangement (600), having
- a ventilator (800) which has a control signal input (815) for receiving a control signal (SK, SKV) and a fan (804) which can be controlled with the aid of the control signal, wherein
- the ventilation arrangement (600) has in addition an auxiliary control device (100) according to any of claims 1 to 8, which is connected, within the ventilator or externally to the ventilator, upstream of the controllable ventilator (800) or of the control signal input (815).

10. Ventilation system (1000), having
- at least one ventilation arrangement according to claim 9 and
- a control device (900) which provides the actual control signal (SK) for the at least one ventilation arrangement.

11. Method of operation for an auxiliary control device (100) according to any of claims 1 to 8 for the local adaptation of a control signal (SK, SKV) to be supplied to a device-external ventilator (800), comprising:
- receiving a ventilator supply voltage (UV);
- providing the ventilator supply voltage (UV) to the device-external ventilator (800);
- receiving from a device-external control device (900) an actual control signal (SK) to be supplied to the ventilator (800) which specifies for the device-external ventilator (800) a target flow rate (SFL);
- detecting a performance parameter (PL) which correlates with an actual conveying performance (IFL) of the ventilator (800);
- determining a target control signal (SKV) depending on the received actual control signal (SK) and the detected performance parameter (PL);
- comparing the target control signal (SKV) with the actual control signal (SK);
- outputting the received actual control signal (SK) or the target control signal (SKV) to the device-external ventilator (800), depending on the result of the comparison.

12. Computer program product containing an executable program code for controlling the implementation of a method according to claim 11 by means of a programmable processing device of the auxiliary control device according to any of claims 1 to 8.

## Revendications

1. Dispositif de commande supplémentaire (100) pour l'adaptation locale d'un signal de commande (SK, SKV) à envoyer à un ventilateur qui est externe au dispositif (800), comportant :
- une entrée d'alimentation (110) à laquelle une tension d'alimentation de ventilateur (UV) peut être appliquée ;
- une sortie d'alimentation (120) qui est conçue pour fournir la tension d'alimentation de ventilateur envoyée (UV) au ventilateur qui est externe au dispositif (800) ;
- une entrée de commande (112) qui est conçue pour recevoir un signal de commande réel (SK) à fournir au ventilateur qui est externe (800) à partir d'une unité de commande externe au dispositif (900), lequel signal donne au ventilateur (800) une valeur de refoulement de consigne (SFL) prédéfinie ;
- une unité de commande (130) qui est reliée à l'entrée de commande (112) et à l'entrée d'alimentation (110) et qui utilise la tension d'alimentation du ventilateur (UV) pour sa propre alimentation, et qui présente :
- une unité de détermination de valeur de refoulement (140) qui est conçue pour détecter une grandeur de puissance mesurée (PL) qui est en corrélation avec une valeur de refoulement réelle (IFL) du ventilateur (800) ;
- une unité d'adaptation de signal de commande (150), qui est conçue pour déterminer un signal de commande de consigne (SKV) en fonction du signal de commande réel reçu (SK) et de la grandeur de puissance mesurée (PL) et pour la comparer avec le signal de commande réel reçu (SK) ;
- une unité de commande de puissance (160) qui est conçue pour fournir soit le signal de commande réel reçu (SK) soit le signal de commande de consigne (SKV) à une sortie de commande (122) au ventilateur qui est externe (800) en fonction du résultat de la comparaison.

2. Dispositif de commande supplémentaire (100) selon la revendication 1, **caractérisé en ce que** l'unité de détermination de valeur de refoulement (140) comporte un ampèremètre (141) connecté en série entre l'entrée d'alimentation (110) et la sortie d'alimentation (120), qui est conçu pour détecter un courant électrique (IM) circulant entre l'entrée d'alimentation (110) et la sortie d'alimentation (120) en tant que grandeur de puissance mesurée (PL) pendant le fonctionnement du ventilateur (800).

3. Dispositif de commande supplémentaire (100) selon la revendication 1 ou 2, dans lequel :
- l'unité de détermination de valeur de refoulement (140) comporte également un capteur de pression (402) qui est conçu pour mesurer un signal de pression (PP) en tant que grandeur de puissance mesurée (PL), qui est en corrélation avec une contre-pression (PC) s'opposant à un débit volumique de refoulement (VF) du ventilateur (800), et dans lequel
- l'unité d'adaptation de signal de commande (150) est conçue pour déterminer le signal de commande de consigne (SKV) seul ou, en cas de dépendance de la revendication 2, en plus en fonction du signal de pression (PP) en tant que grandeur de puissance mesurée (PL).

4. Dispositif de commande supplémentaire (100) selon au moins l'une des revendications 1 à 3, dans lequel
- l'unité de détermination de valeur de refoulement (140) reçoit également un signal de vitesse (PN) d'un ventilateur (804) du ventilateur externe (800) et l'unité de détermination de valeur de refoulement (140) est conçue pour attribuer un débit volumique de refoulement (VF) de manière unique à la grandeur de puissance mesurée (PL) à l'aide du signal de vitesse (PN) et dans lequel
- l'unité d'adaptation de signal de commande (150) est conçue pour déterminer le signal de commande de consigne (SKV) en plus en fonction du signal de vitesse (PN) et du courant mesuré (IM) en tant que grandeur de puissance mesurée (PL).

5. Dispositif de commande supplémentaire (100) selon au moins l'une des revendications précédentes,
- avec une mémoire de courbes caractéristiques (152) contenant une pluralité de champs de courbes caractéristiques (KP) du ventilateur externe (800), montrant chacun une dépendance entre la grandeur de puissance mesurée (PL) et le débit volumétrique (VF) refoulé, et dans lequel
- l'unité d'adaptation de signal de commande (150) est constituée pour déterminer le signal de commande de consigne (SKV) basée sur au moins un champ de courbes caractéristiques (KP).

6. Dispositif de commande supplémentaire (100) selon au moins l'une des revendications précédentes,
- avec un module de fonction qui a au moins une fonction mathématique, la au moins une fonction mathématique décrivant une dépendance entre une contre-pression s'opposant au débit volumique de refoulement du ventilateur et le débit volumique de refoulement.

7. Dispositif de commande supplémentaire (100) selon la revendication 5, **caractérisé en ce que** l'unité d'adaptation du signal de commande (150) comprend en outre un commutateur de paramétrage (180) qui est conçu pour régler au moins un champ de courbe caractéristique (KP) parmi un ensemble de champs de courbes caractéristiques (KPG).

8. Dispositif de commande supplémentaire (100) selon l'une des revendications précédentes, **caractérisée en ce que** le signal de commande (SK, SKV) est sous la forme d'un signal de tension (US) ou d'un signal modulé en largeur d'impulsion (PWM).

9. Agencement de ventilation (600) avec
- un ventilateur (800) ayant une entrée de signal de commande (815) pour recevoir un signal de commande (SK, SKV) et un ventilateur contrôlable (804) utilisant le signal de commande, dans lequel
- l'agencement de ventilation (600) présente en outre un dispositif de commande supplémentaire (100) selon l'une des revendications 1 à 8, qui est monté en amont du ventilateur réglable (800) ou de l'entrée de signal de commande (815) à l'intérieur du ventilateur ou à l'extérieur du ventilateur.

10. Système de ventilation (1000) comprenant :
- au moins un agencement de ventilation selon la revendication 9, et
- un dispositif de commande (900) qui fournit à l'au moins un agencement de ventilation le signal de commande réel (SK).

11. Procédé de fonctionnement d'un dispositif de commande supplémentaire (100) selon l'une des revendications 1 à 8 pour l'adaptation locale d'un signal de commande (SK, SKV) à fournir à un ventilateur qui est externe au dispositif (800), comprenant les étapes consistant à :
- recevoir une tension d'alimentation de ventilateur (UV) ;
- fournir la tension d'alimentation du ventilateur (UV) au ventilateur qui est externe au dispositif (800) ;
- recevoir un signal de commande réel (SK) à fournir au ventilateur (800), qui prédétermine une valeur de refoulement de consigne (SFL) pour le ventilateur qui est externe au dispositif (800), à partir d'une unité de commande externe au dispositif (900) ;
- détecter une grandeur de puissance mesurée (PL) à corréler avec un débit réel (IFL) du ventilateur (800) ;
- déterminer un signal de commande de consigne (SKV) en fonction du signal de commande réel reçu (SK) et de la grandeur de puissance mesurée (PL) ;
- comparer le signal de commande de consigne (SKV) avec le signal de commande réel (SK) ;
- sortir le signal de commande réel reçu (SK) ou le signal de commande de consigne (SKV) vers le ventilateur qui est externe au dispositif (800) en fonction du résultat de la comparaison.

12. Produit formant programme d'ordinateur, contenant un code de programme exécutable pour commander l'exécution d'un procédé selon la revendication 11 par un dispositif à processeur programmable du dispositif de commande supplémentaire selon l'une des revendications 1 à 8.
